**Europäisches Patentamt**

**European Patent Office**

**Office européen des brevets**

(19)

(11) Numéro de publication: **0 219 384**
**B1**

---

(12) ## FASCICULE DE BREVET EUROPEEN

(45) Date de publication du fascicule du brevet:
07.02.90

(51) Int. Cl.⁴: **F16D 65/56**

(21) Numéro de dépôt: **86401984.9**

(22) Date de dépôt: **10.09.86**

(54) Entretoise à réglage automatique, à verrouillage thermique, pour frein à tambour.

(30) Priorité: **19.09.85 FR 8513906**

(43) Date de publication de la demande:
**22.04.87 Bulletin 87/17**

(45) Mention de la délivrance du brevet:
**07.02.90 Bulletin 90/6**

(84) Etats contractants désignés:
**DE GB IT SE**

(56) Documents cités:
**EP-A- 0 077 726**
**EP-A- 0 178 966**
**FR-A- 2 570 455**
**US-A- 2 570 398**
**US-A- 4 148 380**

(73) Titulaire: **BENDIX France, 126, rue de Stalingrad,**
**F-93700 Drancy(FR)**

(72) Inventeur: **Mery, Jean-Claude, 61, Rue Emile Zola,**
**F-93320 Pavillons Sous Bois(FR)**
Inventeur: **Cousin, Xavier, 2, Rue de Joinville,**
**F-75019 Paris(FR)**

(74) Mandataire: **Lejet, Christian et al, BENDIX FRANCE**
**Division Technique Service Brevets Bendix**
**Europe 126 rue de Stalingrad, F-93700 Drancy(FR)**

## Description

La présente invention concerne les dispositifs de réglage automatique destinés à compenser automatiquement l'usure des garnitures de friction des segments de frein d'un frein à tambour et, plus particulièrement, une entretoise de réglage automatique à verrouillage thermique pour frein à tambour, destinée à être montée entre deux segments du frein, l'entretoise comportant un corps d'entretoise et un système à vis et écrou dont la vis est reçue dans un logement du corps d'entretoise et dont l'écrou coopère sélectivement avec un cliquet solidaire d'une lame élastique montée sur le corps d'entretoise.

Une entretoise de ce type est décrite dans les documents EP-A 0 077 726 et EP-A 0 178 966. La présente invention a pour but d'améliorer une telle entretoise par un moyen de verrouillage thermique interdisant le réglage de l'entretoise en cas de surchauffe du frein.

Le document US-A 4 148 380 décrit une entretoise comportant un bras interdisant la rotation inverse d'un écrou cranté, un bilame spirale étant prévu pour lever cette interdiction en cas de surchauffe du frein de manière à ce que l'entretoise revienne à sa longueur initiale. Un tel bilame spiralé présente l'inconvénient d'être difficile à mettre en place de façon appropriée et correcte en production en série.

L'entretoise objet de l'invention est à réglage automatique, à verrouillage thermique, pour frein à tambour destinée à être montée au voisinage de moyens de serrage disposés entre deux premières extrémités de deux segments garnis d'éléments de friction, ladite entretoise, en appui par chacune de ses extrémités sur chacun des deux segments comportant de l'usure des éléments de friction formés par un système vis-écrou commandé par un cliquet sollicitant une denture solidaire d'un des éléments du système vis-écrou, ledit cliquet étant porté par une lame élastique solidaire de ladite entretoise, ladite lame étant écartée élastiquement de ladite entretoise, le frein étant au repos, au moyen d'un levier basculant monté sur ladite entretoise, ledit levier autorisant par basculement le rapprochement entre ladite lame et ladite entretoise lorsque lesdits segments sont sollicités en écartement.

Selon l'invention, elle comporte un bilame dont une extrémité est fixée au corps de l'entretoise et l'autre extrémité agit sur le levier pour empêcher le basculement et interdire en conséquence le réglage lors d'une surchauffe du frein, le bilame ayant sa partie de plus grande dilatation adjacente au corps de l'entretoise.

Il a été proposé dans le brevet US 1 570 398 un dispositif de réglage automatique constitué par un système à rochet agissant sur un système vis-écrou de manière à allonger une entretoise au fur et à mesure de l'usure des éléments de friction. La démultiplication obtenue par ce dispositif permet le réglage par approches successives; de plus, pour éviter un surréglage dû à un échauffement temporaire excessif, on utilise un bilame en tant que cliquet pour faire tourner la roue à rochet, ledit cliquet étant écarté de la roue pour une température élevée prédéterminée.

Ce dispositif présente l'inconvénient, d'une part de comporter un nombre élevé de composants de petite dimension et, d'autre part, de comporter des éléments fixés à un des segments et des éléments à l'entretoise, le montage d'un tel frein ainsi que les interventions éventuelles pendant la durée de vie de ce frein sont compliqués et risquent de provoquer une détérioration des composants qui pourraient nuire au fonctionnement normal de ce dispositif. De plus, l'utilisation du matériau constituant une lame bimétallique pour réaliser le cliquet est très discutable, étant donné la coopération erratique qui en résulte entre le cliquet et la roue à rochet en fonction des variations de température.

C'est une des raisons pour lesquelles l'invention propose d'agir sur le levier de commande du réglage automatique coopérant avec le cliquet et non pas le remplacement de ce dernier par un bilame.

D'autres caractéristiques et avantages de la présente invention ressortiront de la description suivante d'un mode de réalisation, donné à titre illustratif mais nullement limitatif, faite en relation avec les dessins annexés sur lesquels:

La figure 1 est une vue schématique d'un dispositif de réglage automatique à verrouillage thermique pour frein à tambour selon l'invention, le verrouillage étant inopérant;

La figure 2 est une vue similaire à celle de la figure 1, montrant le verrouillage thermique en action;

La figure 3 est une vue de dessus du dispositif des figures 1 et 2;

La figure 4 est une vue en coupe selon la ligne 4-4 de la figure 1.

La figure 5 montre le levier de la figure 4 selon une variante, et

La figure 6 montre le bilame de la figure 3 selon une variante.

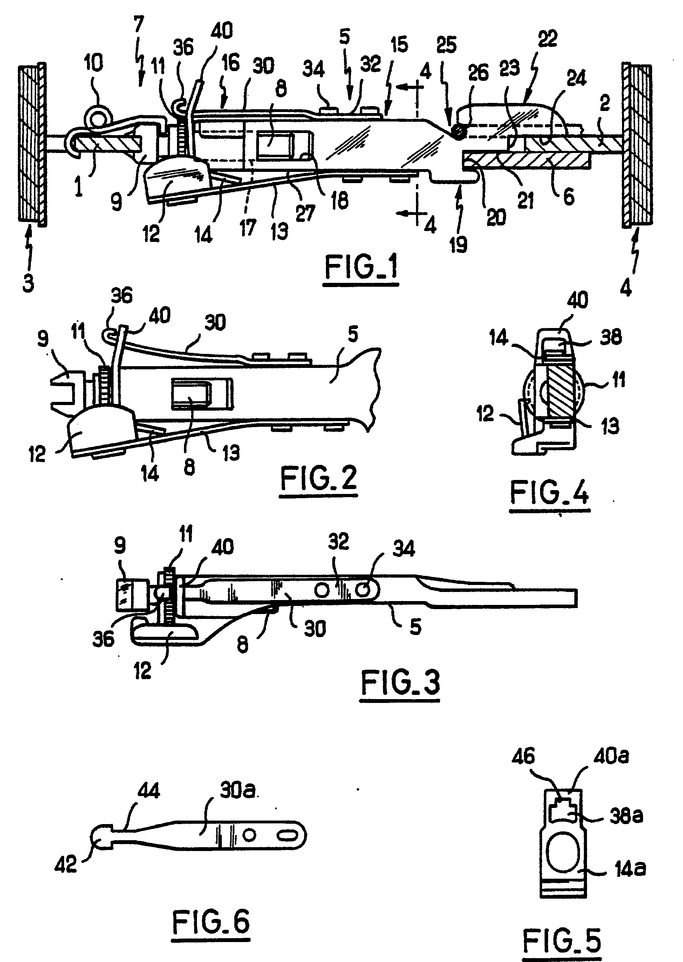

Comme le montre la figure 1, et conformément à l'enseignement des documents EP-1-0 77 726 et FR-A 2 570 455 sus-mentionnés, on a représenté une entretoise deréglage automatique disposée en appui par chacune de ses extrémités entre les âmes 1 et 2 de deux segments de freins 3 et 4 d'un frein à tambour de véhicule automobile, l'entretoise de réglage automatique étant disposée au voisinage des moyens de serrrage (non représentés) disposés également entre les deux segments 3 et 4 pour solliciter cesderniers en écartement, en engagement de friction contre le tambour du frein (également non représenté). L'entretoise de réglage automatique comprend un corps d'entretoise 5, destiné à coopérer, par une de ses extrémités, avec l'âme 2 du segment de frein 4 et avec un levier 6 de frein à main du frein à tambour, et un système à vis et écrou 7 destiné à coopérer, par une de ses extrémités, avec l'âme 1 de l'autre segment de frein 3. Le système à vis et écrou 7 comporte une vis 8 pourvue d'une tête 9 maintenue en engagement, par un ressort 10, avec l'âme 1 du segment de frein 3, et un écrou 11 engagé sur la vis 8 et portant extérieurement une denture à rochet destinée à coopérer sélectivement avec un cliquet 12 solidaire d'un lame élastique 13 montée sur le corps d'entretoise 5. Comme on le verra plus avant, le cliquet 12 est normalement maintenu écarté de la denture de l'écrou 11 par un basculeur ou équerre de réglage 14 engagé librement sur la vis 8 et disposé entre l'écrou 11 et la face plane d'extrémité adjacente au corps d'entretoise 5, comme décrit dans le document EP-A-0 077 726 sus mentionné.

Conformément au document FR-A 2 570 455, le corps d'entretoise 5 est réalisé d'une seule pièce de fonderie, de préférence en bronze coulé. Le corps d'entretoise 5 comporte une partie principale allongée en forme de poutre de section sensiblement parallélépipédique terminée, à une extrémité, par une tête élargie 16 à section sensiblement carrée, traversée longitudinalement par un alésage 17 se prolongeant, dans la partie principale 15, au delà de la tête d'extrémité 16, par une partie cylindrique 17 de même diamètre, partiellement fermée périphériquement, c'est à dire ayant une portion latérale ouverte 18 résultant de la différence d'épaisseur entre la partie principale 15 et la tête d'extrémité 16. A l'opposé de la tête d'extrémité 16, la partie principale allongée 15 se termine, à sa partie inférieure (sur le dessin), par une partie formant crochet 19 destinée à recevoir la tranche du levier de frein à main 6 et définissant, pour ce dernier, un fond formant butée 20 et une face d'appui latérale 21. La partie principale allongée 15 se termine, à sa partie supérieure (sur le dessin), par une aile de prolongement 22 se raccordant avec la face 21 de la partie formant crochet 19 par un épaulement 23 et formant une face de contact longitudinal 24 pour une face adjacente de l'âme 2 du segment de frein correspondant 4. De plus, l'aile de prolongement 22 se raccorde à la partie supérieure de la partie principale allongée 15 par une zone formant crochet destinée à recevoir un brin d'un ressort 26 accroché par ailleurs à l'âme 2 du segment de frein 4 pour solliciter en rapprochement ce dernier vers l'épaulement 23.

La face inférieure 27 (sur le dessin) de la partie principale allongée 15 du corps d'entretoise 5 est sensiblement plane et comporte deux ergots faisant saillie vers l'extérieur perpendiculairement à cette face 27 au voisinage de la partie formant crochet 19 et destinés à être reçus dans des trous correspondants de la lame élastique 13, les ergots étant venus directement de fonderie avec le corps d'entretoise 5. La lame 13 est fixée sur le corps d'entretoise 5 par sertissage des extrémités des ergots.

On décrira maintenant plus particulièrement le dispositif de verrouillage objet de la présente invention.

Il consiste en un bilame 30 fixé par une de ses extrémités 32 sur le corps d'entretoise 5 par écrasement de protubérances formant ergots 34 venues de moulage avec le corps. Le bilame 30 a sa face de plus grande dilatation adjacente à la partie supérieure du corps 5 (si l'on considère le dessin). A la température ambiante, il s'étend parallèlement au corps 5 à faible distance de ce dernier. L'extrémité libre en forme de crochet 36 du bilame 30 pénètre dans une ouverture 38 d'un prolongement 40 de la plaquette de l'équerre de réglage 14 comme le montre la figure 4. Le prolongement 40 est légèrement rabattu par rapport au plan de la plaquette. Cette disposition permet un meilleur accrochage du crochet 36 sur le bord supérieur de l'ouverture 38 lorsque le bilame est chauffé et prend la position dans laquelle il est représenté à la figure 2 en vue du verrouillage de l'équerre formant levier de commande.

On a montré à la figure 5 un levier 14a et à la figure 6 un bilame 30a selon une variante. La fenêtre 38a du prolongement 40a comporte, à sa partie supérieure, une découpe 46 prévue pour recevoir la partie de moindre largeur 44 reliant le corps du bilame 30a à une tête 42.

Le bilame selon cette variante est plus économique à fabriquer que lorsqu'il comporte le crochet 36.

On rappellera, pour mémoire, le mode de fonctionnement général du dispositif de réglage automatique de la Fig. 1 en l'absence du verrouillage thermique objet de la présente invention.

Au repos, le ressort (non représenté) qui sollicite les segments 3 et 4 l'un vers l'autre, sollicite le corps d'entretoise 5 et le système à vis et écrou 7 l'un vers l'autre en plaquant ainsi la plaquette de l'équerre de réglage 14 en appui, d'une part contre la face plane d'extrémité de la tête 16 du corps d'entretoise 5 et contre l'écrou adjacent 11. Ce faisant, le bras de l'équerre de réglage 14 dégage la lame élastique 13 de la face 27 du corps d'entretoise 5 et, partant, le cliquet 12 (solidaire de la lame 13 ou articulé élastiquement sur cette dernière) de la denture de l'écrou 11.

Lors de la mise en oeuvre des moyens de serrage du frein, les segments 3 et 4 sont sollicités en écartement l'un par rapport à l'autre, tendant ainsi à écarter l'un de l'autre le corps d'entretoise 5 et le système à vis et écrou 7, ce qui permet à la plaquette de l'équerre de réglage 14 de recouvrer une position inclinée par rapport à la vis 8 sur laquelle elle est montée et donc à la lame élastique 13 de se rapprocher élastiquement de la face 27 du corps d'entretoise 5 en amenant le cliquet 12 en engagement avec la denture de l'écrou 11, ce qui tend à faire tourner celui-ci par rapport à la vis 8 jusqu'à ce que la lame 13 adopte sa configuration de repos par rapport au corps d'entretoise 5. Lorsque le freinage est relâché, les deux segments 3 et 4 se rapprochent de nouveau l'un de l'autre en tendant ainsi à contracter l'entretoise, ce qui provoque de nouveau le basculement de la plaquette de l'équerre de réglage 14 pour dégager le cliquet 12 de la denture de l'écrou 11.

Le mode de fonctionnement qui vient d'être décrit est normal lorsque, le frein étant froid, le bilame 30 occupe la position dans laquelle il est montré à la figure 1, permettant le libre basculement du levier 14 sans accrochage du bord supérieur de la fenêtre 38 du prolongement 40 dudit levier par le crochet 36.

Lors d'un échauffement exagéré du frein, le bilame se déforme et vient occuper la position dans laquelle il est montré à la figure 2. Si le levier 14 a tendance à basculer, lors de l'application du frein, le bord supérieur de la fenêtre 38 de son prolongement 40 vient buter sur le crochet 36, ce qui s'oppose à toute action de l'extrémité libre du levier sur la lame 13 portant le cliquet. On peut considérer alors que le réglage automatique est verrouillé thermiquement jusqu'à ce que le bilame soit revenu dans sa position parallèle au corps 5 de l'entretoise.

**Revendications**

1. Entretoise à réglage automatique, à verrouillage thermique, pour frein à tambour, destinée à être montée au voisinage de moyens de serrage disposés entre deux premières extrémités de deux segments (3, 4) garnis d'éléments de friction, ladite entretoise, en appui par chacune de ses extrémités sur chacun des deux segments comportant un dispositif d'allongement automatique en fonction de l'usure des éléments de friction formés par un système vis-écrou (8, 11) commandé par un cliquet (12) sollicitant une denture solidaire d'un des éléments du système vis-écrou (8, 11), ledit cliquet (12) étant porté par une lame élastique (13) solidaire de ladite entretoise, ladite lame (13) étant écartée élastiquement de ladite entretoise, le frein étant au repos, au moyen d'un levier (14) autorisant par basculement le rapprochement entre ladite lame et ladite entretoise lorsque lesdits segments (3, 4) sont sollicités en écartement caractérisée en ce qu'elle comporte un bilame (30) dont une extrémité est fixée en corps (5) de l'entretoise et l'autre extrémité (36) agit sur le levier (14) pour empêcher le basculement et interdire en conséquence le réglage lors d'une surchauffe du frein, ledit bilame (30) ayant sa partie de plus grande dilatation adjacente audit corps.

2. Entretoise selon la revendication 1, caractérisée en ce que, ledit levier (14) étant formé par une plaquette montée avec jeu diamétral sur la vis (8) du système vis-écrou prolongée par un bras formant un angle supérieur à 90° avec le plan de ladite plaquette et dont l'extrémité libre coopère avec la lame portant le cliquet, la plaquette dudit levier (14) présente un prolongement opposé audit bras et faisant saillie hors de l'entretoise pour coopérer avec ledit bilame (30) porté par cette dernière en vue de réaliser le verrouillage du levier (14) dans une position correspondant à l'écartement du cliquet (12) par rapport à la denture.

3. Entretoise selon la revendication 2, caractérisée en ce que le prolongement (40) de la plaquette faisant saillie hors de l'entretoise comporte une ouverture (38) dans laquelle pénètre l'extrémité libre (36) du bilame.

4. Entretoise selon la revendication 3, caractérisée en ce que l'extrémité libre (36) du bilame (30) comporte un crochet dirigé vers l'extérieur de l'ouverture.

5. Entretoise selon la revendication 3, caractérisée en ce que l'extrémité du bilame (30a) est plate et comporte une tête en T (42–44) susceptible de coopérer avec une découpe (46) de l'ouverture (38a) quand le bilame est chauffé.

6. Entretoise selon l'une des revendications 3 à 5, caractérisée en ce que le prolongement (40) faisant saillie hors de l'entretoise est légèrement rabattu vers l'extrémité du bilame (32) fixée au corps (5) de l'entretoise.

7. Entretoise selon l'une des revendications 3 à 6, caractérisée en ce que le bilame (30) est fixé au corps (5) de l'entretoise par écrasement de protubérances (34) venues de moulage avec ledit corps.

**Claims**

1. Automatically adjustable and thermally lockable strut for a drum brake, intended to be mounted in the vicinity of brake application means arranged between two first ends of two shoes (3, 4) lined with friction components, the said strut, which bears with each of its ends against each of the two shoes, having a device which automatically extends according to the wear of the friction components formed by a nut-and-bolt system (8, 11) operated by a pawl (12) engaging with teeth integral with one of the members of the nut-and-bolt system (8, 11), the said pawl (12) being mounted on an elastic leaf (13) integral with the said strut, the said leaf (13) being elastically separated from the said strut, when the brake is at rest, by means of a lever (14) allowing, by tilting, the said leaf to move towards the said strut when the said shoes (3, 4) are pushed apart, characterized in that it comprises a bimetallic strip (30), one end of which is fixed at the body (5) of the strut and the other end (36) acts on the lever (14) so as to prevent tilting and consequently make adjustment impossible when the brake overheats, the bimetallic strip having its most dilated part adjacent to the body of the strut.

2. Strut according to Claim 1, characterized in that, the said lever (14) being formed by a plate mounted with diametral play on the bolt (8) of the nut-and-bolt system and extended by an arm which forms an angle greater than 90° with the plane of the said plate and the free end of which co-operates with the leaf carrying the pawl, the plate of the said lever (14) has an extension which is located opposite the said arm and projects outside the strut so as to co-operate with the said bimetallic strip (30) mounted on the latter in order to lock the lever (14) in a position where the pawl (12) is separated from the teeth.

3. Strut according to Claim 2, characterized in that the extension (40) of the plate projecting outside the strut has an opening (38) into which the free end (36) of the bimetallic strip penetrates.

4. Strut according to Claim 3, characterized in that the free end (36) of the bimetallic strip (30) has a hook pointing towards the outside of the opening.

5. Strut according to Claim 3, characterized in that the end of the bimetallic strip (30a) is flat and has a T-shaped head (42–44) capable of co-operating with a cutaway section (46) of the opening (38a) when the bimetallic strip is heated.

6. Strut according to any of Claims 3 to 5, characterized in that the extension (40) projecting outside the strut is folded down slightly towards the end of the bimetallic strip (32) which is fixed to the body (5) of the strut.

7. Strut according to any of Claims 3 to 6, characterized in that the bimetallic strip (30) is fixed to the body (5) of the strut by swaging the protuberances (34) moulded integrally with the said body.

## Patentansprüche

1. Strebe mit selbsttätiger Nachstellung und thermischer Verriegelung für Trommelbremse, dazu bestimmt, in der Nachbarschaft von Spannmitteln angebracht zu werden, die zwischen zwei ersten äußersten Enden von mit Reibungsteilen belegten Segmenten (3, 4) angeordnet sind, wobei diese Strebe, mit jedem ihrer äußersten Enden auf jeden der beiden Segmente abgestützt, eine selbsttätige Dehnungsvorrichtung in Abhängigkeit vom Verschleiß der Reibungsteile umfaßt, die von einem System Schraube-Mutter gebildet sind, das von einer Klinke (12) gesteuert wird, die eine mit einem der Teile des Systems Schraube-Mutter (8, 11) fest verbundene Verzahnung beansprucht, wobei diese Klinke (12) von einem mit dieser Strebe fest verbundenen Federblatt (13) getragen wird und dieses Blatt (13) bei Ruhelage der Bremse elastisch von dieser Strebe mittels eines Hebels (14) abgespreizt wird, der durch Kippen die Annäherung zwischen diesem Blatt und dieser Strebe gestattet, wenn diese Segmente (3, 4) abgespreizt beansprucht werden, dadurch gekennzeichnet, daß sie einen Bimetallstreifen (30) trägt, dessen eines äußerstes Ende am Körper (5) der Strebe befestigt ist und dessen anderes äußerstes Ende (36) auf den Hebel (14) einwirkt, um das Kippen zu verhindern und folglich die Nachstellung bei einer Überhitzung der Bremse zu verbieten, wobei der Teil der größten Ausdehnung dieses Bimetallstreifens (30) an diesen Körper angrenzt.

2. Strebe nach Anspruch 1, dadurch gekennzeichnet, daß dieser Hebel (14) von einem Plättchen gebildet wird, das mit diametralem Spiel auf der Schraube (8) des Systems Schraube-Mutter angebracht ist, die durch einen Arm verlängert ist, der einen Winkel von mehr als 90° mit der Ebene dieses Plättchens bildet und dessen freies äußerstes Ende mit dem die Klinke tragenden Blatt zusammenwirkt, wobei das Plättchen dieses Hebels (14) eine diesem Arm entgegengesetzte und aus der Strebe herausragende Verlängerung aufweist, um mit diesem von letzterer getragenen Bimetallstreifen (30) zusammenzuwirken, damit die Verriegelung des Hebels (14) in einer Stellung durchgeführt wird, die dem Abspreizen der Klinke (12) im Verhältnis zur Verzahnung entspricht.

3. Strebe nach Anspruch 2, dadurch gekennzeichnet, daß die Verlängerung (40) des aus der Strebe herausragenden Plättchens eine Öffnung (38) hat, in die das freie äußerste Ende (36) des Bimetallstreifens eindringt.

4. Strebe nach Anspruch 3, dadurch gekennzeichnet, daß das äußerste freie Ende (36) des Bimetallstreifens (30) einen zum Äußeren der Öffnung gerichteten Haken umfaßt.

5. Strebe nach Anspruch 3, dadurch gekennzeichnet, daß das äußerste Ende des Bimetallstreifens (30a) flach ist und einen T-förmigen Kopf (42–44) umfaßt, der dazu geeignet ist, mit einer Aussparung (46) der Öffnung (38a) zusammenzuwirken, wenn der Bimetallstreifen erhitzt ist.

6. Strebe nach einem der Ansprüche 3 bis 5, dadurch gekennzeichnet, daß die aus der Strebe hervorragende Verlängerung (40) leicht zum am Körper (5) der Strebe befestigten äußersten Ende des Bimetallstreifens (32) hin gebogen ist.

7. Strebe nach einem der Ansprüche 3 bis 6, dadurch gekennzeichnet, daß der Bimetallstreifen (30) am Körper (5) der Strebe durch Eindrücken von Protuberanzen (34) befestigt ist, die aus dem Formguß mit diesem Körper herrühren.

FIG.1

FIG.2

FIG.4

FIG.3

FIG.6

FIG.5